# EUROPEAN PATENT SPECIFICATION

(11) **EP 0 500 970 B1**
(45) Date of publication and mention of the grant of the patent: **12.04.1995**
(21) Application number: 91916612.4
(22) Date of filing: 20.09.1991
(51) Int. Cl.: H02K 44/04, H02K 31/02, B63H 11/02

(54) **THRUST GENERATOR**
SCHUBERZEUGER
GENERATEUR DE POUSSEE

(30) Priority: 21.09.1990 JP 253380/90
(43) Date of publication of application: 02.09.1992
(73) Proprietor: TADA, Eiichi, Izumi-shi, Ohsaka 599-02 (JP)
(72) Inventor: TADA, Eiichi, Izumi-shi, Ohsaka 599-02 (JP)
(74) Representative: Laufhütte, Dieter, Dr.-Ing.
(86) International application number: PCT/JP91/01250
(87) International publication number: WO 92/05621

(56) References cited:
- WO-A-90/14265
- WO-A-91/07806
- FR-A- 2 112 791
- JP-A-62 160 991
- JP-B-61 037 158
- PATENT ABSTRACTS OF JAPAN vol. 7, no. 76 (E-167)(1221) 30 March 1983 ; & JP-A-58 003 565

## Description

### BACKGROUND OF THE INVENTION

### Field of the Invention

The present invention relates to a thrust generator which is a superconducting Electro Magnetic Thruster (hereinafter referred as EMT) of ship propulsion devices, a Dynamic Positioning System for ocean platforms and an Electro-Magnetic pump acting on an electrically conductive fluid, for example, sea water and a MHD generator and pumps and generators of pumping-up power systems. In the known systems, dipole, quadrupole, saddle and racetrack type superconducting magnets are used for EMTs. The conventional EMTs may however be too big and too heavy to gain enough thrust of full-scale ships because of low magnetic field of such magnets and of being difficult to construct. The magnetic field strength must be of the order of 10 to 20 Teslas to obtain enough propulsive efficiency of EMT ships. The EMT having such strong magnetic fields may be a huge one while an on-board EMT propulsion device is limited as to its size and its weight because of restriction of hull space. Hitherto, it has not been possible to realize EMT propulsion units with a satisfactory size, weight, thrust force and high magnetic field. In view of this, there is an important technical problem to develop EMTs for practical use.

### Description of the Prior Art

The previous invention by the inventor, PCT/JP89/01153, (see copending European patent application EP-A-0 453 567), had the purpose of supplying light weight and compact thrust superconducting magnets. According to the previous invention, the superconducting EMT generator comprises a superconducting solenoid magnet, a power supply device and a thrust duct having a spiral portion with a pair of electrodes inserted in the hollow interior of the superconducting solenoid coil magnet. Current feeders are provided for supplying current to said electrodes from said power supply device. The openings of the inlet and the outlet of the spiral duct are provided along the longitudinal center axis of the solenoid coil magnet. In the case of sea water as a conductive fluid flowing through the thrust duct, the anode or positive electrode, is arranged continuously on the radially inner side wall of the duct, and the cathode or negative electrode, is opposed to the outer side wall of the duct. A similar device is disclosed in FR-A-2 112 791.

### Summary of the Invention

In the known thrust generator described above, the velocity of electromagnetic fluid flow becomes much greater so that the propulsive energy efficiency is decreasing rapidly, because of increasing greatly the frictional loss between the thrust duct wall and fluid.

The present invention has the purpose of providing thrust generators with higher thrust and higher propulsive efficiency, reducing fluid frictional losses by matching the velocity of the thrust duct and one of fluid, by rotation of the thrust duct. This object is achieved by a thrust generator in accordance with claim 1.

The thrust generator according to the invention has a structure wherein a helical duct is rotatably supported inside a hollow Portion of a superconducting magnet of a solenoid coil type, positive and negative electrodes are so bonded to the surface of the thrust duct as to permit the flow of an electromagnetic fluid such as sea water, and electric current is supplied from a current feeder to the electromagnetic fluid inside the thrust duct so as to generate a Lorentz's force with a magnetic fluid. The current feeders are mounted on the thrust duct at equal intervals. The Lorentz's force is also generated in each element of the current feeder by the magnetic field generated by the superconducting magnet and the electrode current flowing through each element, and rotates and drives the thrust duct.

The thrust generator by the present invention has a power busbar apparatus, supplying the electric current into current feeders. The power busbar apparatus is made up of ringbars fixed at concentric center of the thrust duct and straight busbars in the longitudinal axis of the thrust duct, making contact with above current feeders.

The power busbar apparatus can be divided into rotatable structure and stationary structure types. In the case of the rotatable structure type providing the ability to rotate with the thrust duct, the power busbar apparatus is fixed on the current feeders mounted in the thrust duct, and has slide terminals or roller terminals to make contact with the power supply generator. The roller type terminals provide making simple and compact structures and reducing sliding friction. In the case of the stationary structure type, the power busbar apparatus has ring busbars between stationary straight busbars of the power busbar apparatus In this type, the sliding friction is so large but makes the weight supporters and the power busbar apparatus in a body.

In the case of sea water as a conductive fluid flowing in the thrust duct, anode is arrange on the inner side wall of the duct, and cathode is opposed to the outer side wall of the duct because of decreasing effective electrochemical reaction area of electrode by producing hydrogen bubbles at the cathode. It is possible to generate the maximum thrust in case of the ratio on 3.5 of outer radius to inner radius of the thrust duct.

### BRIEF DESCRIPTION OF DRAWINGS

FIG.1 shows a cut-away drawing of a device adopting the present invention,
FIG.2 shows an enlarged detail drawing,

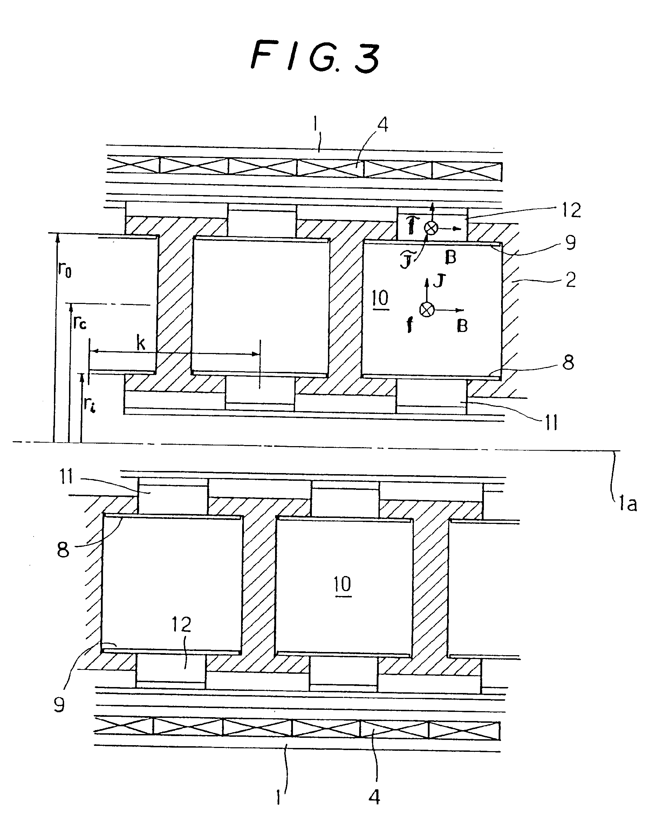

FIG.3 shows an a cross section along arrow III-III in FIG.1,
FIG.4 shows a general layout illustration of a power busbar apparatus,
FIG.5 shows Lorentz's force in a element of a current feeder,
FIG.6 shows a velocity diagram between a rotational velocity of a thrust duct and a flow velocity of an electromagnets fluid,
FIG.7 shows a frictional loss against a rotational velocity of a thrust duct, and
FIG.8 shows an enlarged detail cross section of a second embodiment.

### DESCRIPTION OF THE PREFERRED EMBODIMENT

Preferred embodiment of the present invention will now be described hereinafter referring accompanying drawings. The thrust generator of the present invention provides a superconducting solenoid coil magnet 1, a rotatable spiral thrust duct 2 and a power supply device 3. The superconducting magnet 1 provides a coil 4 winded by superconducting wires to be set in a highly efficient thermal insulated container of a cryostat. The superconducting solenoid magnet generates so much strong magnetic field in the hollow interior 5 of the magnet. The superconducting solenoid magnet 4 is operating in the persistent current mode or by connecting with power supply lines. The winding concept of the superconducting solenoid magnet 4 may be a pancake type or a layered type.

The thrust duct 2 is a rotatable spiral hollow one with rectangular cross section. The spiral portion of the thrust duct 2 is inserted in the hollow interior of the superconducting solenoid magnet 1. Both of an inlet 6 and an outlet 7, each having an opening 6a, 7a, of the thrust duct 2 extend along the longitudinal center axis 1a of the superconducting solenoid magnet 1. There is however no restriction concerning with cross section form of the thrust duct 2 in the present invention. The thrust duct is supported by support devices such as rollers and so on.

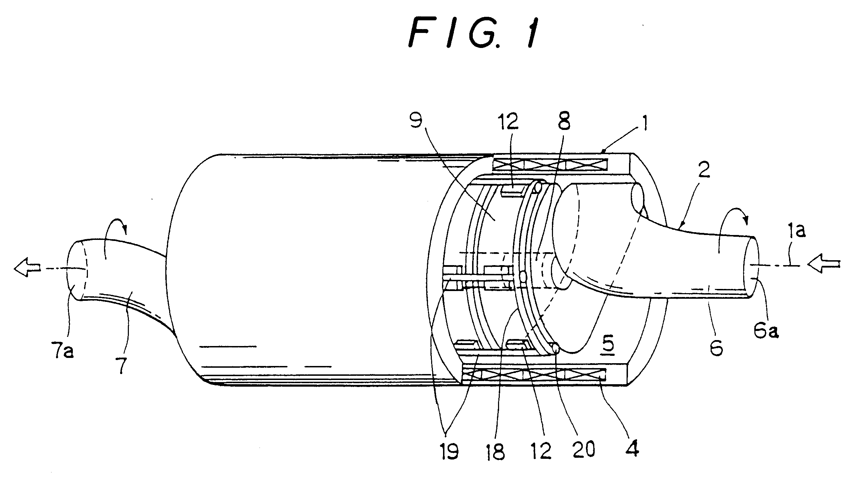

Electrodes 8,9 are fixed at both walls of the thrust duct 2. In Fig.1 the anode 8 is arranged on the inner side wall of the thrust duct 2, and the cathode 9 is opposed to the outer side wall of the thrust duct 2 because of decreasing effective electrochemical reaction area of the cathode 9 by producing hydrogen bubbles. The present invention is not restricted concerning with arrangements of electrodes.

The power supply device 3 consists of plural current feeders 11.12 and power busbar apparatus 13,14. In the inside portion of the thrust duct 2, the inner current feeders 11 are set at interval of 90 degree. In the portion between outside of the thrust duct 2 and inside of the superconducting solenoid magnet 1, outer current feeders 12 are set at interval of 45 degree. Each of current feeders 11,12 is mounted and fixed in the thrust duct 2, contacting with inner current feeders to anode 8, contacting with outer current feeders to cathode 9.

The inner power busbar apparatus 13 is made up of a small ringbar 15 and four straight busbars 16,... extending from the ringbar 15. The ringbar 15 is placed in concentric center of the thrust duct 2, making contact with roller terminals 17,17 in the inner wall of the ringbar 15. The straight busbar 16 is inserted into the inside portion of the thrust duct 2 at the corresponding position to the inner current feeders 11, its length being along the longitudinal axis of the thrust duct 2, making contact with all inner current feeders 11.

The outer power busbar apparatus 14 is made up of a large ringbar 18 and eight straight busbars 19 extending from the ringbar 18. The ringbar 18 is placed in concentric center of the thrust duct 2, making contact with roller terminals 20,... in the inner wall of the ringbar 18. The straight busbar 19 is inserted into the outside portion of the thrust duct 2 at the corresponding position to the outer current feeders 12, its length being along the longitudinal axis of the thrust duct 2, making contact with all inner current feeders 12.

In the present embodiment the electrode current is supplied from the roller terminals 17,17 of the inner power busbar apparatus 13, to the ringbar 15, to the four straight bursars 16, to the inner current feeders 11, to the anode 8, and at last into the electromagnetic fluid 10. The supplied electrode current flows from the electromagnetic fluid 10, to the cathode 9, to outer current feeders 12, to straight busbars 19, to the ringbar 18, to the roller terminals 20.

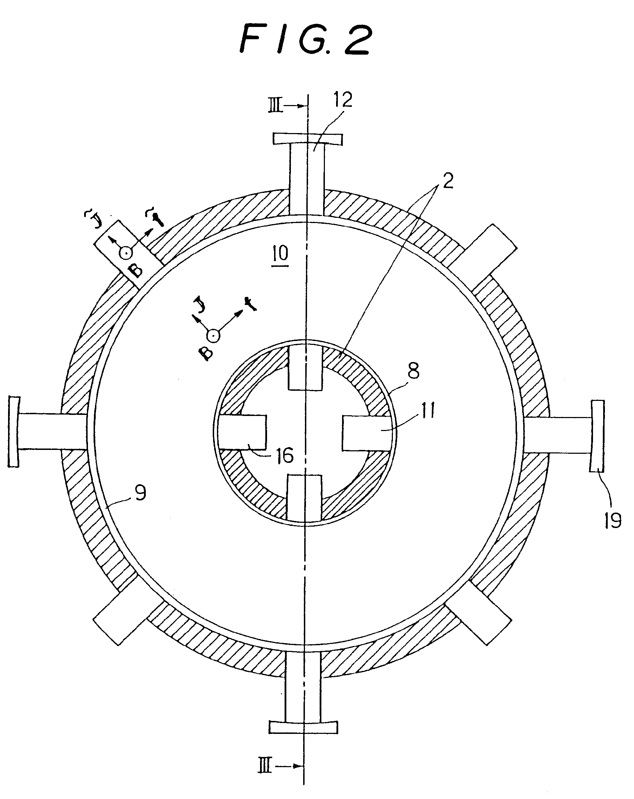

In FIG.2, the reaction between the magnetic field B generated by the fixed superconducting solenoid magnet 1 and the electric current J passing through the sea water from anode 8 to cathode 9 generates a Lorentz's force F whose direction is shown by arrow. The electromagnetic fluid 10 flows into the thrust duct 2 through an opening 6a at the inlet end portion 6. is pressed continuously the Lorentz's force F inside the thrust duct 2, is accelerated by this force and is jetted outside from an opening 7a at the outlet end portion 7. The reaction of the jet force becomes a thrust.

Now introducing the electrode current J (A), the electrode voltage V (V), the input electric power P (W) is calculated from the following equations,${\text{P=J·V =j²·(r}}_{\text{c}} {\text{²/s)·2π1·1n(r}}_{\text{o}} {\text{/r}}_{\text{i}} \text{)}$${\text{V=[(r}}_{\text{c}} {\text{·j)/σ]·1n(r}}_{\text{o}} {\text{/r}}_{\text{i}} \text{)}$${\text{J=j(2πr}}_{\text{c}} {\text{·b)n=j(2πr}}_{\text{c}} \text{)1}$
where;
- j:: Electric current density at the reference radius rc(A/m²)
- rc:: Reference radius ( ri + ro )/2 (m)
- ro:: Outer radius of the thrust duct (m)
- ri:: Inner radius of the thrust duct (m)
- b:: Cell length of the thrust duct (m)
- n:: .Number of cell of the thrust duct
- 1:: Overall length of the thrust duct (m)
- σ:: Sea water electric conductivity (S/m)

The Lorentz's force F (N) is calculated from the following relation,$\text{F=j·B·S} {\text{=j·B(r}}_{\text{o}} {\text{²-r}}_{\text{i}} \text{²)·πbn} {\text{=j·B(r}}_{\text{o}} {\text{²-r}}_{\text{i}} \text{²)·π1}$
Substituting the Lorentz's force relation into the input power equation,$\text{F²=} \frac{{\text{Pσ·B²π1/2·(r}}_{\text{o}} {\text{}}^{{\text{}}^{\text{2}}} {\text{-r}}_{\text{i}} {\text{}}^{{\text{}}^{\text{2}}} \text{)²}}{{\text{r}}_{\text{c}} {\text{}}^{{\text{}}^{\text{2}}} {\text{·1 n(r}}_{\text{o}} {\text{/r}}_{\text{i}} \text{)}}$
As the results,$\text{F²=4A·} \frac{{\text{(r}}_{\text{o}} {\text{}}^{{\text{}}^{\text{2}}} {\text{-r}}_{\text{i}} {\text{}}^{{\text{}}^{\text{2}}} \text{)²}}{{\text{1n(r}}_{\text{o}} {\text{/r}}_{\text{i}} \text{)}}$
where A is defined as follows,$\text{A=Pσ·B²π1/2}$
The Maximum Lorentz's force is obtained when it is satisfied with the following relation.${\text{δF²/δr}}_{\text{i}} \text{=0}$
The numerical solutions show that the maximum Lorentz's force is able to be gained when the thrust duct dimension is satisfied with the relation, ro = 3.5 ri. The experimental results supported the analytic results.

In a similar way, the Lorentz's force f is also generated in each element of inner and outer current feeders 11,12 by the magnetic field B by the superconducting solenoid magnet 1 and by the current J flowing through each element of current feeders, and rotates and drives the thrust duct 2.

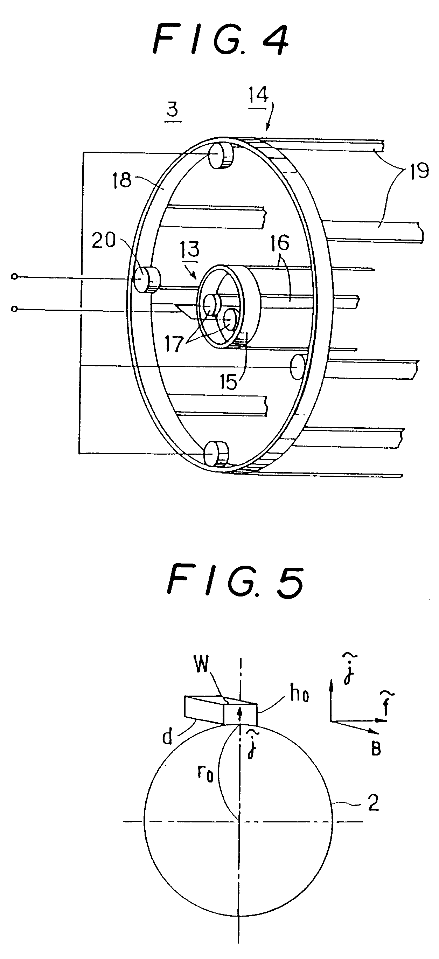

Now it will be described in the followings about the rotating force generating in each element of current feeders in FIG. 5. FIG.5 shows in case of the outer current feeders 12.

Supposing the dimension of element, like as FIG.5, w(m) in width, ho (m) in thickness, d (m) in length, the average current density j is obtained from followings,$\text{j=(J/mn)(1/dw) (A/m²)}$
and the Lorentz force density fₒ due to the magnetic field B is,${\text{f}}_{\text{o}} \text{=j·B} \text{=(J/mn) (1/dw)B (N/m³)}$
The Lorentz's force fe per one outer current feeder is given the following,${\text{f}}_{\text{e}} {\text{=f}}_{\text{o}} {\text{dwh}}_{\text{o}}$
As the results, the total Lorentz's force Fe acting on (m x n) current feeders is,${\text{F}}_{\text{e}} {\text{=mnf}}_{\text{e}} \text{=mn(J/mn) (w/dh₀) Bdwh₀} {\text{=JBh}}_{\text{o}}$
In the present analysis, the Lorentz's force is depend on the thickness ho of current feeders under a constant magnetic field B and a constant electrode current J. The rotating moment To acting on the thrust duct 2 is calculated from the followings,${\text{T}}_{\text{o}} {\text{=mnfe·2r}}_{\text{o}} {\text{=2JBh}}_{\text{o}} {\text{r}}_{\text{o}}$
By the same way, the rotating moment Ti by the inner current feeders is obtained.${\text{T}}_{\text{i}} {\text{=2JBh}}_{\text{i}} {\text{r}}_{\text{i}}$
where hi is the thickness of the inner current feeders and ri the inner radius of the thrust duct 2.

The resultant rotating moment T acting on the thrust duct is calculated from the following equation,${\text{T=T}}_{\text{o}} {\text{+T}}_{\text{i}} {\text{=2JB(h}}_{\text{o}} {\text{r}}_{\text{o}} {\text{+h}}_{\text{i}} {\text{r}}_{\text{i}} \text{)}$

For example, in the case of electrode current J=4000(A), magnetic field B=10(T), inner radius of the thrust duct ri=0.228(m), outer radius of the thrust duct ro=0.8(m) and thickness of current feeders hi=ho=0.1(m), the inner, outer and total rotating moment acting the thrust duct are computed, respectivety,${\text{T}}_{\text{o}} \text{=6400(Nm)=653(kgf·m)}$${\text{T}}_{\text{i}} \text{=1824(Nm)=186(kgf·m)}$$\text{T =8224(Nm)=839(kgf·m)}$

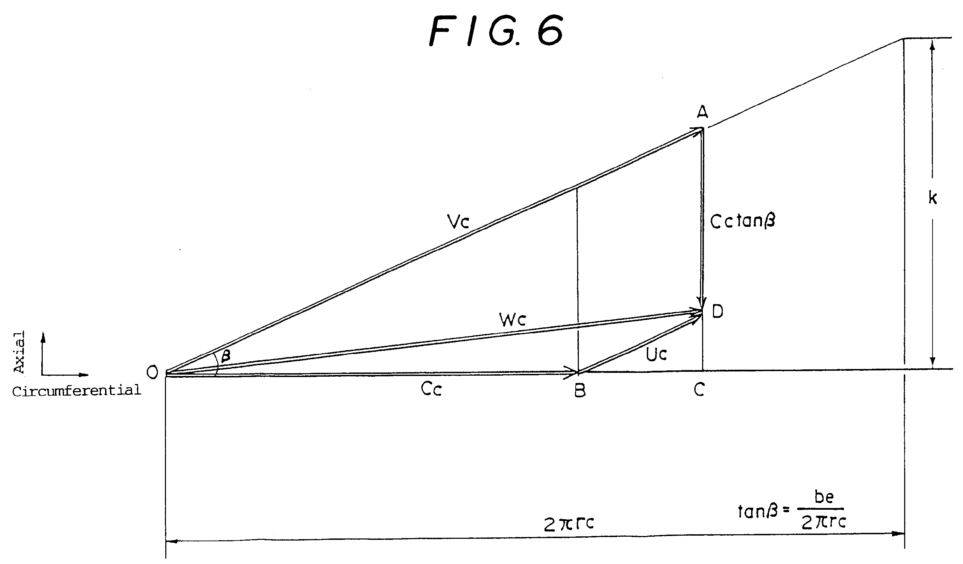

FIG.6 show the thrust duct, introducing lead k and lead angle of the thrust duct defined by a longitudinal direction gain against one revolution of the thrust duct. Now supposing the condition of frictionless or slip between fluid and the wall of the thrust duct, of being uniform and steady flow, and of the thrust duct being stationary, the electromagnetic fluid 10 flows in direction of O̅A̅ with its velocity Vc. And now, rotating the thrust duct in circular direction of O̅B̅ with its velocity Cc, the electromagnetic fluid 10 is pressed by the wall of the thrust duct 2 and moves in direction of A̅D̅, its moving velocity Cc tan(β), where tan(β)=k/(2πrc ). Then in view of a stationary coordinate, the fluid 10 flows in absolute direction of O̅D̅ with its velocity Wc. On the other hand, in a rotative coordinate of the rotating thrust duct, the fluid 10 flows in relative direction of B̅D̅ with its velocity Uc against the thrust duct. Here the velocity Uc is calculated from the followings,${\text{U}}_{\text{c}} {\text{:V}}_{\text{c}} {\text{=V}}_{\text{c}} {\text{cosβ-C}}_{\text{c}} {\text{:V}}_{\text{c}} \text{cosβ}$${\text{U}}_{\text{c}} {\text{=V}}_{\text{c}} {\text{(V}}_{\text{c}} {\text{cosβ-C}}_{\text{c}} {\text{)/V}}_{\text{c}} \text{cosβ} {\text{=(V}}_{\text{c}} {\text{cosβ-C}}_{\text{c}} \text{)/cosβ} {\text{=V}}_{\text{c}} {\text{-(C}}_{\text{c}} \text{/cosβ)}$

That is, in the case of the thrust duct 2 being stationary, the velocity difference between the electromagnetic fluid 10 and the wall of the thrust duct 2 is Vc. In the case of thrust duct rotating with the circular velocity Cc, the velocity difference between the electromagnetic fluid 10 and the wall of the thrust duct 2 is Uc which is smaller than Vc. Then the fluid frictional loss of rotating the thrust duct is able to be reduced greatly in comparison with the stationary thrust duct because of frictional loss being depend to square of the velocity difference.

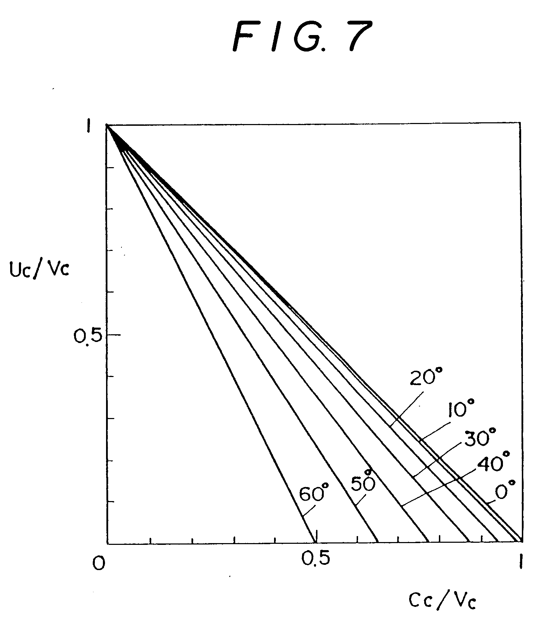

Here introducing an angular velocity ω, the revolution n (rpm) of the thrust duct in order to obtain the circular velocity Cc is gained by the following relation,${\text{n=(30/π)·(C}}_{\text{c}} {\text{/r}}_{\text{c}} \text{)}$${\text{C}}_{\text{c}} {\text{=r}}_{\text{c}} {\text{ω=r}}_{\text{c}} \text{2πn/60}$
And the ratio of Uc to Vc, so that the ratio of diminution of frictional loss is given by the following relation${\text{U}}_{\text{c}} {\text{/V}}_{\text{c}} {\text{={V}}_{\text{c}} {\text{-(C}}_{\text{c}} {\text{/cos β)}/V}}_{\text{c}} {\text{=1-(C}}_{\text{c}} {\text{/V}}_{\text{c}} \text{)·(1/cos β)}$
The calculated results are plotted in FIG.7. FIG.7 shows that, for example, supposing that the circular velocity of the thrust duct 2 is 80 percent of the flow velocity of electromagnetic fluid and that the lead angle is = 30°, the ratio of diminution of frictional loss is about 90 percent.

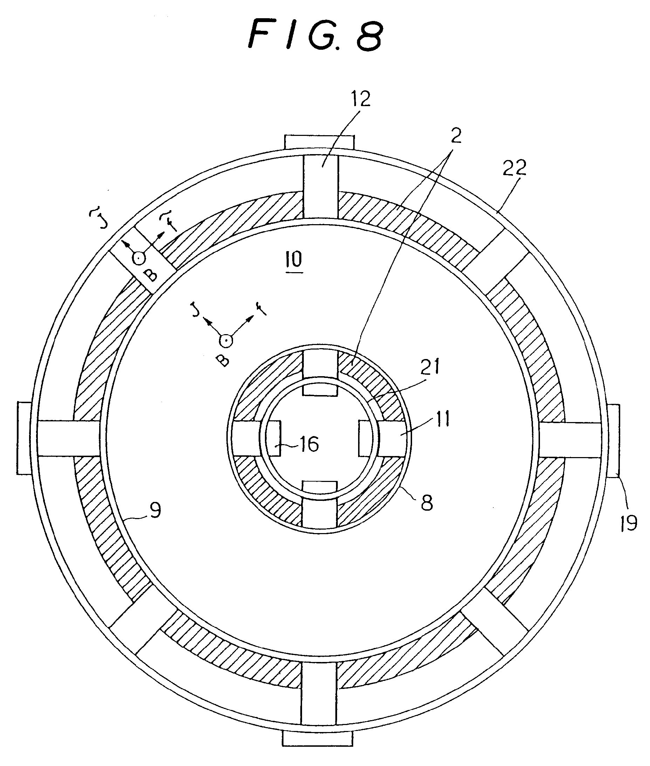

FIG 8 shows an embodiment called divided and stationary power busbar apparatus in comparison with the above embodiment called concentrate and rotatable power busbar apparatus. In this embodiment, the power busbar apparatus 13,14 of the power supply device 3 have ringbusbars 21,22, respectively and are stationary structures in case of rotating the thrust duct 2. In this type, the sliding friction between stationary ring busbars 21,22 and rotatable current feeders 11,12 is so great. This type power busbar apparatus has the advantage of making the weight supporters and the power busbar apparatus in a body.

It is possible that a pair of superconducting solenoid magnets are arranged in row, making closed loop magnetic flux line, resulting in magnetic flux density generated by a pair of superconducting magnets being so much stronger than a single superconducting magnet, as showing in the previous invention. PCT/JP89/01153.

### INDUSTRIAL APPLICABILITY

The present invention is suitable for the ship propulsion system by generating thrust in the horizontal direction. And it is useful for Dynamic Positioning (DP) systems to produce the thrust in the horizontal and vertical directions. It is possible to be used as large sea water pumps, flowing sea water into filed EMTs and discharging from the duct. Using the reverse principle of EMTs, it is possible to use ocean currents (MHD) for power generators.

## Claims

1. Thrust generator comprising a superconducting solenoid magnet (1), a power supply device (3), and a thrust duct (2) having a spiral portion inserted in a hollow interior of said superconducting solenoid magnet, an anode (8) being fixed continuously in a radially inner side wall of said thrust duct, a cathode (9) being arranged continuously in an opposite side wall, inner (11) and outer (12) current feeders being provided for supplying current from said power supply device to said anode (8) and cathode (9) respectively, openings (6a,7a) of inlet (6) and outlet (7) of said thrust duct (2) being provided along the center axis of said superconducting magnet, characterised in that said inner (11) and outer (12) current feeders are disposed equiangularly over the respective duct walls, and in that the duct (2) is mounted for rotation about the said center axis by Lorentz's force generated in said current feeders.

2. Thrust generator according to claim 1, wherein said power supply device (3) comprises a power busbar apparatus (13,14) supplying electric current to said current feeders (11,12), said power busbar apparatus comprising a ringbar (15,18) in concentric center of said thrust duct and a straight busbar (16,19) extended from said ringbar, making contact with said current feeder.

3. Thrust generator according to claim 2, wherein said power busbar apparatus (13,14) is fixed to said current feeder (11,12), having the ability to rotate with said thrust duct (2).

4. Thrust generator according to claim 3, wherein a supply terminal (17,20) from the power supply device (3) makes contact with an inner wall or an outer wall of said ringbar (15,18).

5. Thrust generator according to claim 2, wherein said power busbar apparatus (13,14) has a ring busbar (21,22) between said current feeder (11,12) and said straight busbar (16,19), the straight busbar, being fixed at a stationary position.

6. Thrust generator according to anyone of claims 1 to 5, wherein the ratio of the outer radius to the inner radius of said thrust duct (2) is about 3.5.

## Patentansprüche

1. Schuberzeuger, der aufweist einen supraleitenden Elektromagneten (1), eine Energieversorgungsvorrichtung (3), und einen Schubkanal (2), der einen Spiralabschnitt hat, der in ein hohles Inneres des supraleitenden Elektromagneten eingefügt ist, eine Anode (8), die kontinuierlich in einer radialen inneren Seitenwand des Schubkanals befestigt ist, eine Kathode (9), die kontinuierlich in einer gegenüberliegenden Seitenwand angeordnet ist, innere (11) und äußere (12) Stromspeiser, die für die Einspeisung von Strom von der Energieversorgungsvorrichtung jeweils in die Anode (8) und Kathode (9) vorgesehen sind, Öffnungen (6a, 7a) eines Einlasses (6) und eines Auslasses (7) des Schubkanals (2), die längs der Mittelachse des supraleitenden Magneten angeordnet sind,
dadurch gekennzeichnet, daß die inneren (11) und äußeren (12) Stromspeiser unter gleichen Winkelabständen an den jeweiligen Kanalwänden angeordnet sind und daß der Kanal (2) zur Rotation um die genannte Mittelachse durch in den Stromspeisern erzeugte Lorentzkräfte gelagert ist.

2. Schuberzeuger nach Anspruch 1, bei dem die Energieversorgungsvorrichtung (3) eine Leistungsstromschienenvorrichtung (13, 14) aufweist, die den Stromspeisern (11, 12) elektrischen Strom zuführt und die eine Ringschiene (15, 18) konzentrisch in der Mitte des Schubkanals und eine geradlinige Stromschiene (16, 14) aufweist, welche sich von der Ringschiene erstreckt und Kontakt mit dem Stromspeiser herstellt.

3. Schuberzeuger nach Anspruch 2, bei dem die Leistungsstromschienenvorrichtung (13, 14) an dem Stromspeiser (11, 12) befestigt ist und die Fähigkeit zur Rotation mit dem Schubkanal (2) hat.

4. Schuberzeuger nach Anspruch 3, bei dem ein Versorgungskontaktanschluß (17, 20) von der Energieversorgungsvorrichtung (3) Kontakt mit einer Innenwand oder einer Außenwand der Ringschiene (15, 18) herstellt.

5. Schuberzeuger nach Anspruch 2, bei dem die Leistungsstromschienenvorrichtung (13, 14) eine Ringschiene (21, 22) zwischen dem Stromspeiser (11, 12) und der geradlinigen Stromschiene (16, 19) hat, wobei die geradlinige Stromschiene in stationärer Stellung befestigt ist.

6. Schuberzeuger nach einem der Ansprüche 1 bis 5, bei dem das Verhältnis des Außenradius' zum Innenradius des Schubkanals (2) etwa 3,5 beträgt.

## Revendications

1. Générateur de poussée comprenant un aimant (1) à solénoïde supraconducteur, un dispositif d'alimentation en énergie (3) et un conduit de poussée (2) ayant une partie en spirale insérée dans un intérieur creux dudit aimant à solénoïde supraconducteur, une anode (8) étant fixée continuellement dans une paroi latérale radialement intérieure dudit conduit de poussée, une cathode (9) étant disposée continuellement dans une paroi latérale opposée, des alimentations en courant intérieur (11) et extérieur (12) étant prévues pour fournir du courant dudit dispositif d'alimentation à ladite anode (8) et ladite cathode (9), respectivement, des ouvertures (6a, 7a) de l'entrée (6) et de la sortie (7) dudit conduit de poussée (2) étant prévues le long de l'axe central dudit aimant supraconducteur, caractérisé en ce que lesdites alimentations en courant intérieur (11) et extérieur (12) sont disposées à angles égaux sur les parois respectives de conduit, et en ce que le conduit (2) est monté à rotation autour dudit axe central par la force de Laplace produite dans lesdites alimentations en courant.

2. Générateur de poussée selon la revendication 1, dans lequel ledit dispositif d'alimentation (3) comprend un appareil formant bus d'alimentation (13, 14) fournissant du courant électrique auxdites alimentations en courant (11, 12), ledit appareil formant bus d'alimentation comprenant une barre annulaire (15, 18) dans le centre concentrique dudit conduit de poussée et un barre bus rectiligne (16, 19) s'étendant depuis ladite barre annulaire, en établissant un contact avec ladite alimentation en courant.

3. Générateur de poussée selon la revendication 2, dans lequel ledit appareil formant bus d'alimentation (13, 14) est fixé auxdites alimentations en courant (11, 12), qui sont aptes à tourner avec ledit conduit de poussée (2).

4. Générateur de poussée selon la revendication 3, dans lequel une borne d'amenée (17, 20) du dispositif d'alimentation (3) établit un contact avec une paroi intérieure ou une paroi extérieure de ladite barre annulaire (15, 18).

5. Générateur de poussée selon la revendication 2, dans lequel ledit appareil formant bus d'alimentation (13, 14) possède un barre bus annulaire (21, 22) entre ladite alimentation en courant (11, 12) et ledit barre bus rectiligne (16, 19), le barre buse rectiligne étant fixé à une position stationnaire.

6. Générateur de poussée selon l'une des revendications 1 à 5, dans lequel le rapport du rayon extérieur au rayon intérieur dudit conduit de poussée (2) est environ de 3,5.
